# EUROPÄISCHE PATENTSCHRIFT

(11) **EP 1 235 705 B1**
(45) Veröffentlichungstag und Bekanntmachung des Hinweises auf die Patenterteilung: **14.04.2004**
(21) Anmeldenummer: 00983246.0
(22) Anmeldetag: 07.12.2000
(51) Int. Cl.: B60T 8/40

(54) **FAHRZEUGBREMSANLAGE MIT EINER MOTOR-/PUMPENEINHEIT UND EINEM AGGREGAT**
VEHICLE BRAKE UNIT COMPRISING A MOTOR/PUMP UNIT AND AN AGGREGATE
SYSTEME DE FREINAGE DE VEHICULE COMPORTANT UNE UNITE MOTEUR/POMPE ET UN GROUPE

(30) Priorität: 07.12.1999 DE 19958927
(43) Veröffentlichungstag der Anmeldung: 04.09.2002
(73) Patentinhaber: Lucas Varity GmbH, 56070 Koblenz (DE)
(72) Erfinder: MOHR, Kurt, 56283 Halsenbach (DE); GILLES, Leo, 56077 Koblenz (DE)
(74) Vertreter: Schmidt, Steffen J., Dipl.-Ing.
(86) Internationale Anmeldenummer: PCT/EP2000/012349
(87) Internationale Veröffentlichungsnummer: WO 2001/042069

(56) Entgegenhaltungen:
- DE-A- 19 542 654
- DE-A- 19 707 654
- US-A- 2 274 274
- US-A- 4 435 021

## Beschreibung

### Hintergrund der Erfindung

Die Erfindung betrifft eine Fahrzeugbremsanlage, die eine Motor-/Pumpeneinheit mit einem Elektromotor und wenigstens eine Pumpe zum Fördern von Bremsfluid aufweist. Der Elektromotor weist dabei einen Stator auf, in dem ein Läufer drehbar angeordnet ist. Die Pumpe ist im wesentlichen innerhalb des Läufers angeordnet und von diesem antreibbar. Ferner betrifft die Erfindung eine derartige Motor-/Pumpeneinheit.

Die Motor-/Pumpeneinheit dient zum Fördern von Bremsfluid zu und von Radbremsen der Fahrzeugbremsanlage, um diese Radbremsen zu betätigen bzw. zu lösen. Derartige Fahrzeugbremsanlagen werden auch als elektrohydraulische Bremsanlagen bezeichnet, die im sogenannten Antiblockier-, Antischlupf- oder Fahrdynamikregelbetrieb betrieben werden können. Die Motor/Pumpeneinheit kann unmittelbar an einer Radbremse eines Fahrzeugs angeordnet sein, oder als zentrales Versorgungsorgan für mehrere Radbremsen dienen.

### Stand der Technik

Aus der US 4 435 021 A ist ein Bremssystem mit einem Fahrzeugbremsaktuator bekannt, bei dem ein Elektromotor eine ortsfest angebrachte Statorwicklung und einen darin drehbar angebrachten Läufer aufweist. Der Läufer trägt mehrere Axialkolben, die sich an einer geneigten Endfläche abstützen und mit dieser eine Schrägscheibenpumpe bilden. Im Betrieb der Schrägscheibenpumpe tritt an den Axialkolben Bremsfluid aus, das den Läufer umspült. Das Bremsfluid tritt auch in einen Spalt zwischen Statorwicklung und Läufer, führt dort zu einem hohen Fluidreibungswiderstand und verringert den magnetischen Fluß zwischen Statorwicklung und Läufer. Der Elektromotor weist daher eine geringe Dynamik, d.h. ein schlechtes Anlaufund Ansprechverhalten auf.

Die DE 195 42 654 A1 beschreibt eine elektronisch steuerbare Bremsanlage für Kraftfahrzeuge mit einer Bremsdruckgebereinheit und einer motorbetriebenen Hilfsdruckquelle. Die Hilfsdruckquelle speist zusätzlich zu oder anstelle der Bremsdruckgebereinheit Radbremsen mit Hydraulikfluid. Die Bremsanlage weist ferner eine motorbetriebene Hydraulikdruckquelle auf, die eine Betätigung der Bremsdruckgebereinheit durch ein Bremspedal unterstützt oder anstelle des Bremspedals eine Betätigung der Bremsdruckgebereinheit bewirkt. Die Hilfsenergiequelle und die Hydraulikdruckquelle werden durch den gleichen Motor angetrieben und stehen mit diesem in ständiger getrieblicher Verbindung. Die Anordnung von Hilfsenergiequelle, Hydraulikdruckquelle und Motor weist einen hohen Einbauraumbedarf auf.

### Der Erfindung zugrundeliegendes Problem

Aufgabe der Erfindung ist eine oben beschriebene Fahrzeugbremsanlage zu verbessern.

### Erfindungsgemäße Lösung

Die Aufgabe ist erfindungsgemäß durch eine Fahrzeugbremsanlage mit einer Motor-/Pumpeneinheit gelöst, die die oben genannten Merkmale aufweist und derart weitergebildet ist, daß an der Motor-/Pumpeneinheit mindestens ein Aggregat angeordnet ist, das mit Hilfe des Läufers antreibbar ist.

Durch die erfindungsgemäße Lösung ist die Anordnung von Motor-/Pumpeneinheit und Aggregat besonders kompakt gestaltet und nur ein kleiner Einbauraum erforderlich. Aufgrund der kompakten Bauform sind nur kleine Massen zu beschleunigen, so daß die Motor-/Pumpeneinheit und das zusätzliche Aggregat ein gutes Anlauf- und Ansprechverhalten aufweisen. Somit kann Bremsfluid hochdynamisch gefördert werden. Der Elektromotor und die Pumpe sind selbst besonders kompakt in sogenannter Cartridge-Bauweise gestaltet. Es können dabei auch mehrere Pumpen von einem Läufer insbesondere radial umgeben sein.

Die Aufgabe ist erfindungsgemäß auch mit einer derartigen Motor-/Pumpeneinheit gelöst.

### Vorteilhafte Ausgestaltungen

Eine vorteilhafte Ausgestaltung sieht vor, daß der Läufer mit dem Aggregat in ständiger getrieblicher Verbindung steht. Diese Verbindung kann z.B. über ein Welle einfach gebildet sein, so daß keine aufwendige und fehleranfällige Kopplung erforderlich ist.

Das Aggregat ist vorteilhaft als pneumatische oder hydraulische Pumpe gestaltet. Die Motor-/Pumpeneinheit bildet somit zusammen mit dem Aggregat eine kompakte Versorgungseinheit, die alle für eine Fahrzeugbremsanlage erforderlichen Druckenergien bereitstellt.

Bei einer vorteilhaften Ausgestaltung ist das Aggregat ein Hydraulikaggregat mit einer Radialkolbenpumpe, wie sie bei bekannten ABS- und ASR-Bremssystemen eingesetzt wird. Mit Hilfe der erfindungsgemäßen Kopplung dieser Radialkolbenpumpe mit einer Motor-/Pumpeneinheit können Bremssysteme einfach mit einer zweiten Druckquelle aus- bzw. nachgerüstet werden.

Eine vorteilhafte Gestaltung sieht vor, daß der Stator und mindestens ein zum Stator gerichteter Abschnitt des Läufers einen elektromagnetischen Bereich definieren, mindestens die Pumpe einen hydraulischen Bereich definiert, und mindestens ein Dichtelement vorgesehen ist, das den elektromagnetischen Bereich von dem hydraulischen Bereich fluiddicht trennt. Das Dichtelement trennt den Stator und den ihm zugewandten Abschnitt des Läufers vom hydraulischen Bereich der Pumpe ab, in dem sich Bremsfluid befindet. Dadurch kann in den Spalt zwischen Stator und Läufer kein Bremsfluid gelangen. Im Spalt entsteht daher kein Fluidreibungswiderstand und die Dynamik des Elektromotors ist erheblich vergrößert. Mit dieser Maßnahme wird auch der Wirkungsgrad des Elektromotors erhöht. Es ist eine regeloptimierte Kombination von Elektromotor und Pumpe geschaffen. Ferner ist der elektromagnetische Bereich vom hydraulischen Bereich fluiddicht getrennt, so daß kein Schmutz in den elektromagnetischen Bereich gelangen kann. Verschmutzung und Beschädigung des Stators, beispielsweise durch aggressives Bremsfluid, sind damit sicher verhindert.

Die Fahrzeugbremsanlage ist vorteilhaft so weitergebildet, daß sich zwischen dem Stator und dem Läufer nur ein Luftspalt befindet. Bei dem in der US 4 435 021 A beschriebenen Fahrzeugbremsaktuator befindet sich der gesamte Läufer im hydraulischen Bereich. Daher ist die Motorwicklung innen von einer Trennwand umgeben, die sie vom hydraulischen Bereich und auch vom Läufer abgrenzt. Bei der erfindungsgemäßen Lösung kann auf diese Trennwand hingegen verzichtet werden. Der Abstand zwischen dem Stator und dem Läufer kann daher sehr klein gestaltet werden. Der Elektromotor weist dadurch einen zusätzlich höheren Wirkungsgrad und ein weiter verbessertes Ansprech- und Anlaufverhalten auf.

Eine vorteilhafte Weiterbildung sieht vor, daß der Stator in einem Gehäuse ortsfest angebracht ist, und das Dichtelement ringförmig zwischen dem Läufer und dem Gehäuse ausgebildet ist. Bei dieser besonders einfachen Gestaltung der Erfindung kann als Dichtelement ein herkömmlicher, preisgünstiger Dichtring verwendet werden, der aus einem großen Sortiment ausgewählt werden und daher besonders gut auf die zu lösende Dichtungsaufgabe abgestimmt sein kann.

Bei einer vorteilhaft weitergebildeten Fahrzeugbremsanlage ist der Läufer im Gehäuse um eine Drehachse drehbar mittels zwei Lagern abgestützt, die an den axialen Endbereichen des Läufers angeordnet sind. Die Lager ermöglichen eine präzise Führung des Läufers, wobei dessen Position unabhängig von der Pumpe eingestellt werden kann.

Der Läufer ist vorteilhaft im wesentlichen becherförmig gestaltet und umfaßt an seinem Boden eine koaxial angebrachte und mitnehmend verbundene Antriebswelle zum Antreiben der Pumpe und des Aggregats. Weil die Becherform nur zu einer Seite geöffnet ist, kann bei einer derartigen Gestaltung in dem Läufer ein geschlossener Raum für die Pumpe besonders einfach abgedichtet werden. Beispielsweise kann hierzu ein Dichtelement an der Öffnung des becherförmigen Läufers angeordnet sein.

Vorteilhaft weist jedoch das Gehäuse einen im wesentlichen hohlzylindrischen Gehäuseabschnitt auf, der radial innen und koaxial in den becherförmigen Läufer ragt, und das Dichtelement ist zwischen dem hohlzylindrischen Gehäuseabschnitt und der Antriebswelle angeordnet. Dadurch wird der Läufer an einer verhältnismäßig kleinen Fläche abgedichtet und es kann ein Dichtelement mit einem kleinen Durchmesser verwendet werden. Derartige Dichtelemente weisen einen geringeren Reibwiderstand auf und benötigen nur wenig Bauraum. Weil zwischen dem Läufer und der Pumpe der Gehäuseabschnitt angeordnet ist, tritt außerdem zwischen Läufer und Pumpe keine Strömungsreibung auf.

Die Pumpe wird vorteilhaft als eine Zahnradpumpe, als Taumelscheibenpumpe oder als Schrägscheibenpumpe gestaltet. Eine solche Pumpe hat eine über der Zeit gleichmäßige Antriebsleistung und kann daher von einem verhältnismäßig leistungsschwachen Elektromotor getrieben werden.

### Kurzbeschreibung der Zeichnung

Weitere Merkmale und Eigenschaften werden anhand der Beschreibung einer Ausführungsform mit Bezug auf die beigefügte Zeichnung erläutert.

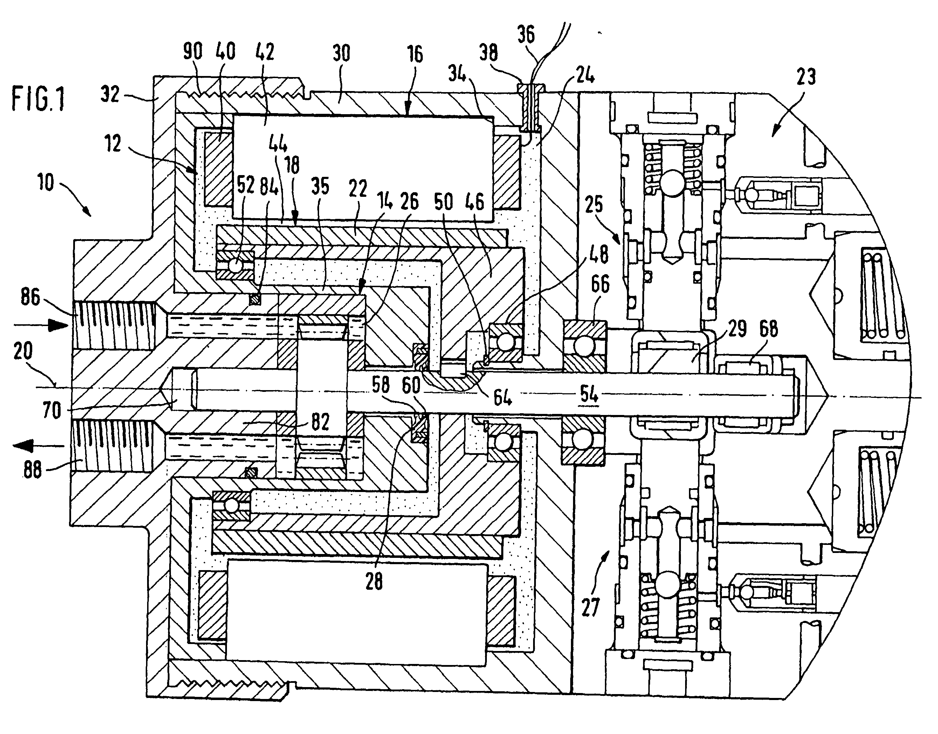

- Fig. 1: zeigt eine Ausführungsform einer erfindungsgemäßen Motor-/Pumpeneinheit mit einem teilweise dargestellten Aggregat im Längsschnitt.

### Detaillierte Beschreibung derzeit bevorzugter Ausführungsformen

Eine Motor-/Pumpeneinheit 10 einer weiter nicht dargestellten blockiergeschützten Fahrzeugbremsanlage umfaßt einen Elektromotor 12 und eine Pumpe 14.

Der Elektromotor 12 ist mit einem hohlzylindrischen Stator 16 und einem darin angeordneten Läufer 18 als bürstenloser Gleichstrommotor gestaltet. Der Läufer 18 ist um eine Drehachse 20 drehbar und sein dem Stator 16 radial zugewandter Abschnitt weist Permanentmagneten 22 auf. Der Läufer 18 ist im wesentlichen hohlzylindrisch gestaltet. In diesem Hohlraum ist die Pumpe 14 koaxial zur Drehachse 20 angeordnet. Die Pumpe 14 wird im Betrieb der Motor-/Pumpeneinheit 10 mit Hilfe des Läufers 18 angetrieben, um Bremsfluid zu nicht dargestellten Radbremsen oder von diesen weg zu fördern.

Um eine hochdynamische und zugleich kompakte Energiequelle für die Fahrzeugbremsanlage zu erhalten, ist der Läufer 18 mit einem Aggregat 23 gekoppelt, das an die Motor/Pumpeneinheit 10 grenzt, Bestandteil der Fahrzeugbremsanlage ist und zum Fördern von Bremsfluid dient. Das Aggregat kann alternativ als Hilfsenergiequelle für einen hydraulischen oder pneumatischen Bremskraftverstärker dienen. Als Hilfsenergiequelle kann aber auch die Pumpe der Motor/Pumpeneinheit dienen, wobei dann das Aggregat Bremsfluid zu den Radbremsen oder von diesen weg fördert.

Im dargestellten Ausführungsbeispiel ist das Aggregat 23 eine Radialkolbenpumpe mit zwei radial gerichteten, gegenüberliegenden Kolben 25 und 27, die mit Hilfe eines zentralen Exzenters 29 verschiebbar sind.

Der Stator 16 und der Läufer 18 sind von einem Gasraum 24 (mit Punkten gekennzeichnet) umgeben, in dem sich Luft befindet. Dieser Teil der Motor-/Pumpeneinheit 10 wird als elektromagnetischer Bereich bezeichnet. Ferner ist die Pumpe 14 von einem Fluidraum 26 (mit Wellenlinien gekennzeichnet) umgeben; der mit Bremsfluid gefüllt ist, wobei dieser Teil als hydraulischer Bereich der Motor-/Pumpeneinheit 10 bezeichnet wird. Zwischen dem elektromagnetischen und dem hydraulischen Bereich ist ein ringförmiges Dichtelement 28 angeordnet, das diese Bereiche fluiddicht trennt. Da sich im elektromagnetischen Bereich somit kein Bremsfluid befinden kann, entsteht zwischen Stator 16 und Läufer 18 keine Fluidreibung. Die Motor-/Pumpeneinheit 10 weist daher eine hohe Dynamik auf. Ferner können der Stator 16 und der Läufer 18 nicht vom Bremsfluid verschmutzt oder beschädigt werden.

Die Motor-/Pumpeneinheit 10 ist außen von einem zur Drehachse 20 rotationssymmetrischen, becherförmigen Gehäuseteil 30 begrenzt, das an seiner in der Fig. linken Stirnseite mit einem Gehäusedeckel 32 verschlossen ist. Im Gehäuseteil 30 ist axial eine Stufe 34 ausgebildet, an der sich der Stator 16 abstützt. Der Stator 16 ist zwischen der Stufe 34 und einem Kragen eines später erläuterten Gehäuseteils 35 axial gehalten und stützt sich radial am Gehäuseteil 30 ab.

Dem Gehäusedeckel 32 entgegengesetzt weist das becherförmige Gehäuseteil 30 in seiner Ringwand eine Öffnung auf, durch die eine Zuleitung 36 in das Innere des Gehäuseteils 30 geführt ist. Die Durchführung der Zuleitung 36 ist mit einer Elastomer-Muffe 38 abgedichtet.

Der Stator 16 weist eine Statorwicklung 40 auf, die um einen Eisenkern 42 gelegt ist. Zwischen dem Eisenkern 42 und den Permanentmagneten 22 befindet sich lediglich ein dünner Luftspalt 44.

Der Läufer 18 weist einen becherförmigen Läuferkörper 46 auf, der radial außen die Permanentmagneten 22 trägt. Der becherförmige Läuferkörper 46 ist an seinem in der Fig. rechten Endabschnitt mittels eines Kugellagers 48 gelagert, das im becherförmigen Gehäuseteil 30 von einem Federring 50 gehalten ist. Der dem Kugellager 48 axial entgegengesetzte Endabschnitt des becherförmigen Läuferkörpers 46 ist mit Hilfe eines zweiten Kugellagers 52 über das Gehäuseteil 35 am Gehäusedeckel 32 abgestützt. Der Läuferkörper 46 ist so präzise zum Stator 16 positioniert. Es kann daher ein besonders dünner Luftspalt 44 gebildet sein.

Eine Antriebswelle 54 durchsetzt einen Boden des becherförmigen Läuferkörpers 46 koaxial und ragt in den vom Läuferkörper 46 gebildeten Hohlraum. Von der dem Boden des becherförmigen Läuferkörpers 46 gegenüberliegenden Seite ragt der hohlzylindrische Gehäuseabschnitt 35 in den Hohlraum. Dieser Gehäuseabschnitt 35 ist an dem der Antriebswelle 54 zugewandten Endbereich gestuft und trägt dort das ringförmige Dichtelement 28, das zur Antriebswelle 54 abdichtet. Das Dichtelement 28 ist in den Gehäuseabschnitt 35 eingepreßt und weist zwei Dichtlippen 58 und 60 auf, die an der Antriebswelle 54 anliegen. Das Dichtelement 28 ist U-förmig gestaltet, wobei die Öffnung der U-Form zum hydraulischen Bereich gerichtet ist. Die Dichtlippe 58 wird daher durch hydraulischen Druck an die Antriebswelle 54 gepreßt.

Axial neben dem Dichtelement 28 ist im Gehäuseabschnitt 35 die Pumpe 14 aufgenommen. Die Pumpe 14 ist als Zahnradpumpe gestaltet, herkömmlich aufgebaut und mit Hilfe der Antriebswelle 54 antreibbar. Dazu ist der Läuferkörper 46 mittels einer Paßfeder 64 drehfest mit der Antriebswelle 54 verbunden.

An die Pumpe 14 schließt axial der Gehäusedeckel 32 an, der einen in den Gehäuseabschnitt 35 ragenden Ansatz 82 aufweist. Die Antriebswelle 54 ragt mit ihrem in der Fig. linken Endbereich in eine im Ansatz 82 koaxial ausgebildete Bohrung 70, in der die Antriebswelle 54 gleitgelagert ist. An der der Pumpe 14 gegenüberliegenden Seite durchsetzt die Antriebswelle 54 am Kugellager 48 die Stirnwand des becherförmigen Gehäuseteils 30 und ragt in das Aggregat 23. Dort ist die Antriebswelle 54 mit zwei Lagern 66 und 68 gelagert. Alternativ kann nur das Lager 68 oder keines der beiden Lager 66 und 68 vorgesehen sein. zwischen den Lagern 66 und 68 ist der Exzenter 29 auf die Antriebswelle 54 gepreßt.

Im Ansatz 82 ist an der dem Gehäuseabschnitt 35 zugewandten äußeren Mantelfläche ein Dichtring 84 eingesetzt. Der Gehäusedeckel 32 ist mit zwei Anschlüssen 86 und 88 versehen, um die Motor-/Pumpeneinheit 10 mit nicht dargestellten Bremsfluidleitungen zu verbinden. Am becherförmigen Gehäuseteil 30 ist ein Außengewinde 90 ausgebildet, auf das der Gehäusedekkel 32 aufgeschraubt ist. Der Gehäusedeckel 32 verschließt somit den Fluidraum 26 fluiddicht.

Im Betrieb der Motor-/Pumpeneinheit 10 rotiert der Läufer 18 relativ zum Stator 16 und dreht dabei die Antriebswelle 54. Die Antriebswelle 54 treibt die Pumpe 14 und das Aggregat 23 an, um Bremsfluid zu fördern.

Bei einem nicht dargestellten Ausführungsbeispiel weist der Läufer einen hohlzylindrischen Läuferkörper auf, der an seinen axialen Endbereichen mit je einem Lager im becherförmigen Gehäuseteil und im Gehäusedeckel gelagert ist.

Dabei ist im becherförmigen Gehäuseteil und im Gehäusedeckel radial außen um die Lager je ein ringförmiges Dichtelement angeordnet, das zwischen dem hohlzylindrischen Läuferkörper und dem Gehäuseteil bzw. dem Gehäusedeckel abdichtet. Damit ist wie oben beschrieben der elektromagnetische vom hydraulischen Bereich getrennt.

Bei einer derartigen Ausführungsform kann die Antriebswelle so gestaltet sein, daß sie sowohl das Gehäuseteil als auch den Gehäusedeckel durchsetzt und an den beiden herausragenden Abschnitten je ein weiteres Aggregat antreibt.

## Patentansprüche

1. Fahrzeugbremsanlage, die eine Motor-/Pumpeneinheit (10) mit einem Elektromotor (12) und wenigstens einer Pumpe (14) zum Fördern von Bremsfluid aufweist, wobei
- der Elektromotor (12) einen Stator (16) aufweist, in dem ein Läufer (18) drehbar angeordnet ist, und
- die Pumpe (14) im wesentlichen innerhalb des Läufers (18) angeordnet und von diesem antreibbar ist,
**dadurch gekennzeichnet, daß**
- an der Motor-/Pumpeneinheit (10) mindestens ein Aggregat (23) angeordnet ist, das mit Hilfe des Läufers (18) antreibbar ist.

2. Fahrzeugbremsanlage nach Anspruch 1,
**dadurch gekennzeichnet, daß** der Läufer (18) mit dem Aggregat (23) in ständiger getrieblicher Verbindung steht.

3. Fahrzeugbremsanlage nach Anspruch 1 oder 2,
**dadurch gekennzeichnet, daß** das Aggregat (23) eine pneumatische oder hydraulische Pumpe ist.

4. Fahrzeugbremsanlage nach Anspruch 1, 2 oder 3,
**dadurch gekennzeichnet, daß** das Aggregat eine Radialkolbenpumpe (25, 27, 29) ist.

5. Fahrzeugbremsanlage nach Anspruch 1, 2 oder 3,
**dadurch gekennzeichnet, daß** der Stator (16) und mindestens ein zum Stator (16) gerichteter Abschnitt (22) des Läufers (18) einen elektromagnetischen Bereich (16, 22, 24) definieren, mindestens die Pumpe (14) einen hydraulischen Bereich (14, 26) definiert und mindestens ein Dichtelement (28) vorgesehen ist, das den elektromagnetischen Bereich (16, 22, 24) von dem hydraulischen Bereich (14, 26) fluiddicht trennt.

6. Fahrzeugbremsanlage nach einem der Ansprüche 1 bis 6,
**dadurch gekennzeichnet, daß** sich zwischen dem Stator (16) und dem Läufer (18) nur ein Luftspalt (44) befindet.

7. Fahrzeugbremsanlage nach Anspruch 5 oder 6,
**dadurch gekennzeichnet, daß** der Stator (16) in einem Gehäuse (30, 32, 35) ortsfest angebracht ist, und das Dichtelement (28) ringförmig zwischen dem Läufer (18) und dem Gehäuse (30, 32, 35) ausgebildet ist.

8. Fahrzeugbremsanlage nach Anspruch 7,
**dadurch gekennzeichnet, daß** der Läufer (18) im Gehäuse (30, 32, 35) um eine Drehachse (20) drehbar mit zwei Lagern (48, 52) abgestützt ist, die an axialen Endbereichen des Läufers (18) angeordnet sind.

9. Fahrzeugbremsanlage nach Anspruch 7 oder 8,
**dadurch gekennzeichnet, daß** der Läufer (18) im wesentlichen becherförmig gestaltet ist (46) und an einem Boden eine koaxial angebrachte und mitnehmend verbundene Antriebswelle (54) zum Antreiben der Pumpe (14) und des Aggregats (23) umfaßt.

10. Fahrzeugbremsanlage nach Anspruch 9,
**dadurch gekennzeichnet, daß** das Gehäuse (30, 32, 35) einen im wesentlichen hohlzylindrischen Gehäuseabschnitt (35) aufweist, der radial innen und koaxial in den becherförmigen Läufer (18) ragt, und das Dichtelement (28) zwischen dem hohlzylindrischen Gehäuseabschnitt (35) und der Antriebswelle (54) angeordnet ist.

11. Fahrzeugbremsanlage nach einem der Ansprüche 1 bis 10,
**dadurch gekennzeichnet, daß** die Pumpe (14) eine Zahnradpumpe, eine Taumelscheibenpumpe oder eine Schrägscheibenpumpe ist.

12. Motor- /Pumpeneinheit (10) für eine elektrohydraulische Fahrzeugbremsanlage mit einem Elektromotor (12) und wenigstens einer Pumpe (14) zum Fördern von Bremsfluid, wobei
- der Elektromotor (12) einen Stator (16) aufweist, in dem ein Läufer (18) drehbar angeordnet ist, und
- die Pumpe (14) im wesentlichen innerhalb des Läufers (18) angeordnet und von diesem antreibbar ist,
**dadurch gekennzeichnet, dass**
- an der Motor- /Pumpeneinheit (10) mindestens ein Aggregat (23) angeordnet ist, das mit Hilfe des Läufers (18) antreibbar ist.

## Claims

1. A vehicle brake system, which comprises a motor/pump unit (10) having an electric motor (12) and at least one pump (14) for delivering brake fluid, wherein
- the electric motor (12) comprises a stator (16) in which a rotor (18) is rotatably disposed and
- the pump (14) is disposed substantially inside the rotor (18) and is adapted to be driven by the latter,
**characterised in that**
- at least one aggregate (23) that is drivable with the aid of the rotor (18) is disposed at the motor/pump unit (10).

2. The vehicle brake system according to claim 1,
**characterised in that** the rotor (18) is in constant driving connection with the aggregate (23).

3. The vehicle brake system according to claim 1 or 2,
**characterised in that** the aggregate (23) is a pneumatic or hydraulic pump.

4. The vehicle brake system according to claim 1, 2 or 3,
**characterised in that** the aggregate is a radial piston pump (25, 27, 29).

5. The vehicle brake system according to claim 1, 2 or 3,
**characterised in that** the stator (16) and at least one portion (22) of the rotor (18) directed towards the stator (16) define an electromagnetic region (16,22, 24), at least the pump (14) defines a hydraulic region (14, 26) and at least one sealing element (28) is provided, which separates the electromagnetic region (16, 22, 24) from the hydraulic region (14, 26) in fluid-tight manner.

6. The vehicle brake system according to one of claims 1 to 6,
**characterised in that** there is only an air gap (44) between the stator (16) and the rotor (18).

7. The vehicle brake system according to claim 5 or 6,
**characterised in that** the stator (16) is provided in a stationary manner in a housing (30, 32, 35), and the sealing element (28) is formed in an annular manner between the rotor (18) and the housing (30, 32, 35).

8. The vehicle brake system according to claim 7,
**characterised in that** the rotor (18) is supported rotatably about an axis of rotation (20) in the housing (30, 32, 35) by means of two bearings (48, 52) that are disposed at axial end regions of the rotor (18).

9. The vehicle brake system according to claim 7 or 8,
**characterised in that** the rotor (18) is of substantially cup-shaped design (46) and comprises at its base a coaxially arranged and motionally coupled drive shaft (54) for driving the pump (14) and the aggregate (23).

10. The vehicle brake system according to claim 9,
**characterised in that** the housing (30, 32, 35) comprises a substantially hollow-cylindrical housing portion (35), which projects radially at the inside and coaxially into the cup-shaped rotor (18), and that the sealing element (28) is disposed between the hollow-cylindrical housing portion (35) and the drive shaft (54).

11. The vehicle brake system according to one of claims 1 to 10,
**characterised in that** the pump (14) is a gear pump, a nutating disk pump or a swash plate pump.

12. A motor/pump unit (10) for an electrohydraulic vehicle brake system, comprising an electric motor (12) and at least one pump (14) for delivering brake fluid, wherein
- the electric motor (12) comprises a stator (16) in which a rotor (18) is rotatably disposed and
- the pump (14) is disposed substantially inside the rotor (18) and is adapted to be driven by the latter,
**characterised in that**
- at least one aggregate (23) that is drivable with the aid of the rotor (18) is disposed on the motor/pump unit (10).

## Revendications

1. Système de freinage de véhicule, lequel présente une unité moteur/pompe (10) comprenant un moteur électrique (12) et au moins une pompe (14) servant à transporter le fluide de freinage,
- le moteur électrique (12) comportant un stator (16) dans lequel est disposé un rotor (18) en rotation, et
- la pompe (14) étant disposée pour l'essentiel à l'intérieur du rotor (18) et pouvant être entraînée par celui-ci,
**caractérisé en ce que**
- au moins un groupe (23) pouvant être entraîné par le rotor (18) est disposé contigu à l'unité moteur/pompe (10).

2. Système de freinage de véhicule selon la revendication 1,
**caractérisé en ce que** le rotor (18) est en liaison entraînante permanente avec le groupe (23).

3. Système de freinage de véhicule selon la revendication 1 ou 2,
**caractérisé en ce que** le groupe (23) est une pompe pneumatique ou hydraulique.

4. Système de freinage de véhicule selon la revendication 1, 2 ou 3,
**caractérisé en ce que** ledit groupe est une pompe à pistons radiaux (25, 27, 29).

5. Système de freinage de véhicule selon la revendication 1, 2 ou 3,
**caractérisé en ce que** le stator (16) et au moins une section (22) du rotor (18) orientée vers le stator (16) forment une zone électromagnétique (16, 22, 24), et au moins la pompe (14) forme une zone hydraulique (14, 26) et **en ce qu'**il est prévu au moins un élément d'étanchéité (28) séparant de manière étanche au fluide la zone électromagnétique (16, 22, 24) de la zone hydraulique (14, 26).

6. Système de freinage de véhicule selon l'une des revendications 1 à 5,
**caractérisé en ce que** le stator (16) et le rotor (18) sont séparés seulement par un entrefer (44).

7. Système de freinage de véhicule selon la revendication 5 ou 6,
**caractérisé en ce que** le stator (16) est monté fixe dans un carter (30, 32, 35) et l'élément d'étanchéité (28) est conçu de forme annulaire entre le rotor (18) et le carter (30, 32, 35).

8. Système de freinage de véhicule selon la revendication 7,
**caractérisé en ce que** le rotor (18) placé à l'intérieur du carter (30, 32, 35) est maintenu en rotation autour d'un axe de rotation (20) par deux paliers (48, 52) disposés à des extrémités axiales du rotor (18).

9. Système de freinage de véhicule selon la revendication 7 ou 8,
**caractérisé en ce que** le rotor (18) est conçu pour l'essentiel en forme de godet (46) et comprend à son fond un arbre (54) d'entraînement relié de façon entraînante et monté de manière coaxiale pour entraîner la pompe (14) et le groupe (23).

10. Système de freinage de véhicule selon la revendication 9,
**caractérisé en ce que** le carter (30, 32, 35) présente une section (35) de carter pour l'essentiel cylindrique et creuse, laquelle fait saillie de manière radiale à l'intérieur et de manière coaxiale dans le rotor (18) en forme de godet, et **en ce que** l'élément d'étanchéité (28) est disposé entre la section (35) cylindrique creuse du carter et l'arbre d'entraînement (54).

11. Système de freinage de véhicule selon l'une des revendications 1 à 10,
**caractérisé en ce que** la pompe (14) est une pompe à engrenages, une pompe à plateau oscillant ou une pompe à plateau inclinable.

12. Unité moteur/pompe (10) pour un système de freinage de véhicule électro-hydraulique comprenant un moteur électrique (12) et au moins une pompe (14) servant à transporter le fluide de freinage,
- le moteur électrique (12) comportant un stator (16) dans lequel est disposé un rotor (18) en rotation, et
- la pompe (14) étant disposée pour l'essentiel à l'intérieur du rotor (18) et pouvant être entraînée par celui-ci,
**caractérisé en ce que**
- au moins un groupe (23) pouvant être entraîné par le rotor (18) est disposé contigu à l'unité moteur/pompe (10).
